# NEW EUROPEAN PATENT SPECIFICATION

(11) **EP 3 355 713 B2**
(45) Date of publication and mention of the opposition decision: **16.11.2022**
(45) Mention of the grant of the patent: 04.09.2019
(21) Application number: 16774947.2
(22) Date of filing: 29.09.2016
(51) Int. Cl.: A23G 9/32, A23G 9/48

(54) **COMPOSITION FOR COATING FROZEN CONFECTIONERY AND A PROCESS FOR MANUFACTURING SAME**
ZUSAMMENSETZUNG ZUR BESCHICHTUNG VON GEFRORENEN SÜSSWAREN UND VERFAHREN ZUR HERSTELLUNG DAVON
COMPOSITION DE REVETEMENT DE CONFISERIE CONGELEE ET PROCEDE DE FABRICATION ASSOCIE

(30) Priority: 30.09.2015 EP 15187783
(43) Date of publication of application: 08.08.2018
(73) Proprietor: Société des Produits Nestlé S.A., 1800 Vevey (CH)
(72) Inventor: RAY, Joydeep, 1066 Epalinges (CH); SCHAFER, Olivier, 1066 Epalinges (CH); BUCZKOWSKI, Johann, 1082 Corcelles-Le-Jorat (CH)
(74) Representative: Lumsden, Stuart Edward Henry
(86) International application number: PCT/EP2016/073375
(87) International publication number: WO 2017/055520

(56) References cited:
- EP-A1- 2 030 508
- EP-A2- 0 424 997
- WO-A1-2008/064962
- WO-A1-2010/072481
- GB-A- 2 297 760
- US-A1- 2010 196 544
- US-A1- 2011 008 499
- US-A1- 2014 065 283
- US-B1- 6 277 433
- SOUCI ET AL: "food composition and nutrition tables, Dairy products", 2000, FOOD COMPOSITION AND NUTRITION TABLES = DIE ZUSAMMENSETZUNG DER LEBENSMITTEL, NÄHRWERT-TABELLEN = LA COMPOSITION DES ALIMENTS, TABLEAUX DES VALEURS NUTRITIVES, MEDPHARM SCIENTIFIC PUBLISHERS, STUTTGART, GERMANY, PAGE(S) 1 - 71, XP002488783, ISBN: 978-3-88763-076-8 page 37 - page 38
- Souci; Fachman; Kraut: "food composition and nutrition tables, cocoa butter" In: "Food composition and nutrition tables = Die Zusammensetzung der Lebensmittel, Nährwert-Tabellen = La composition des aliments, tableaux des valeurs nutritives", 2008, Medpharm Scientific Publishers, Stuttgart, Germany, XP055256950, page 198, the whole document
- "Edible Oil and Fat Products : Oils and Oilseeds" In: HUI; Y H: "Bailey's Industrial Oil and Fat Products", 1996, JOHN WILEY, US, NEW YORK, XP002755296, vol. 2, pages 282-285, page 283, last paragraph - page 285, paragraph 1; table 6.13
- United States Court of Customs and Patent Appeals, 20 October 1977 (1977-10-20), pages 12-19,
- Virginie Dubois, Sylvie Breton, Michel Linder, Jacques Fanni, Michel Parmentier: "Fatty acid profiles of 80?vegetable oils with regard to their nutritional potential", EUROPEAN JOURNAL OF LIPID SCIENCE AND TECHNOLOGY, vol. 109, no. 7, 1 July 2007 (2007-07-01), pages 710-732, DE ISSN: 1438-7697, DOI: 10.1002/ejlt.200700040
- Foubert, I. Dewettinck, K. Vanrolleghem, P.A.: "Modelling of the crystallization kinetics of fats", TRENDS IN FOOD SCIENCE AND TECHNOLOGY, vol. 14, no. 3, 1 March 2003 (2003-03-01), pages 79-92, GB ISSN: 0924-2244, DOI: 10.1016/S0924-2244(02)00256-X
- Gianduja coated Ice Cream product available February 2000. Mintel gnpd.com
- Gianduja coated Ice Cream product, available January 2014 Mintel gnpd.com
- Ference A Mohos: "Confectionery and Chocolate Engineering. Principles and Applications. Excerpt", , 1 January 2010 (2010-01-01), page 33,
- Frank D. Gunstone, John L. Harwood, Albert J. Dijkstra: "The Lipid Handbook with CD-ROM, Third Edition /Passage/" In: "The Lipid Handbook with CD-ROM, Third Edition", 13 March 2007 (2007-03-13), CRC Press pages 49-52,
- Clarke, The Science of Ice Cream, 2004, page 55
- Goff et al, Ice Cream, 2013, page 274
- Representation of revised Figure 3 in the opposed patent and data for most commonly used fat/oils and coating compositions described in D5
- The Science of Ice Cream C Clarke pp 96. RSC published 2012.
- USA Food and Drug Administration - High Oleic Sunflower Oil Specification
- Factsheet of Sunflower Oil Fatty Acid Profile (June 2010)

## Description

### Field of the invention

The present invention relates to a composition for coating a frozen confection, in particular to a low SFA coating composition. The invention also relates to a method for coating a frozen confection.

### Background

Coated frozen confections are products which are highly appreciated by consumers. Texture and nutritional profile of the coating is driver for consumer preference.

With the increasing concern for health and wellness there is an increasing need for reducing calories, sugars and fats also in frozen confections.

Chocolate-like or compound coatings based on vegetable fats are commonly used for coating frozen confection. The crystallization of the fats in a coating are a key contributor to the physical properties of a coating, in particular its -textural properties (brittleness, melting) and setting time. Traditionally compound coatings for frozen confection have been manufactured with high proportions of lauric fats (e.g. coconut oil and palm kernel oil) which have a saturated fatty acid (SFA) level about 90%. With high amounts of lauric fats in the coatings, the SFA levels in the finished coating are typically between 30 and 60%.

Regarding fats the consumers are looking for products which are healthier but provide the same properties to the product. Solutions to this problem exist in the form of coatings blends comprising particular liquid oils which are lower in SFA and fractions of palm oil. The viscosity of these blends is important for achieving the SFA reduction because too viscous coating will result in more coating in the finished product and consequently a bigger quantity of SFA.

EP2099313 (Nestec) discloses an ice confection having an ice confection core and a snappy outer compound coating layer that has a reduced saturated fatty acid content. The fat in the compound coating is a mixture of fractionated palm oil and liquid oil. This compound coating has similar textural characteristics to that of conventional products, particularly 'snappiness'. This coating provides advantages in terms of substantial SFA reduction. Nevertheless, there continue to be a need for further reduction of SFA.

EP2367441 (Unilever) discloses a composition for coating a frozen confection is provided, the composition comprising from 63 to 70 wt% of a fat component comprising: 70 to 925 wt% of a palm oil fraction or blend of fractions which contains at most 8 wt% of S3 triglycerides and has a S2U: SU2 ratio of > 2.5; 5 to 15 wt % of a liquid oil; and 0 to 15 wt % of cocoa butter. The terminology S and U denote the fatty acid residue in the triglycerides, wherein S is for saturated fatty acid and U stands for unsaturated fatty acids.

These characteristics refer to a combination of liquid oils and palm mid fraction, as stated in the application, namely Creamelt 900, Creamelt 700; containing >60% solids at 20°C. However, in order to achieve the right physical attributes of the coating, a higher fat content i.e. 63-70 wt% comprising palm oil fraction or blend of fractions of at least 85 wt% and 5-15 wt% of a liquid oil is required. This application requires high amount of fat component necessary to be in a coating which in turn limits the overall SFA content and thickness of the coating.

Several prior art has used interesterified fats as a structuring agent to produce low saturated coating for confectionery products. Interesterification is a process to modify the physico-chemical properties of fats and oils such as, texture, mouthfeel, crystallization and melting behaviour. Interesterification involves an acyl-rearrangement reaction on the glycerol molecule in presence of chemical catalyst or enzymes. Saturated fatty acids are not common in the central "2 position" of natural triglycerides. They are more common in interesterified fats, where the interesterification process has re-arranged the positions of the fatty acids. WO 2014/036557 A1 (Aarhus Karlshamn USA Inc.) discloses a low saturated fat composition for coating confectionery products, the composition comprising 24-35 wt% of fat and 55-75 wt% of non-fat solids, wherein the fat component comprises 35-80 wt% of a structuring agent and 20-65% of liquid oil. The structuring agent comprises an interesterified blend of palm stearin and palm kernel stearin.

US 2011/008499 A1 (Akhane Akira [JP]) discloses a coating composition for confectionery products, the composition comprises an interesterified oil (A) that is non-selectively interesterified and contains 80 wt % or more of a fatty acid having 16 or more carbon atoms and 35 to 60 wt % of a saturated fatty acid having 16 or more carbon atoms in its constituent fatty acids, and an interesterified oil (B) that is non-selectively interesterified and contains 20 to 60 wt % of a saturated fatty acid having 12 to 14 carbon atoms and 40 to 80 wt % of a saturated fatty acid having 16 to 18 carbon atoms in its constituent fatty acids. The composition also included a tri-saturated fatty acid acylglycerol in a content of 10 to 15 wt %.

Further GB 2 297 760 A (Loders Croklaan BV [NL]) discloses a coating composition for confectionery products, the composition comprises at least 40% BOO triacylglycerides and displaying a solid fat content of N30 ≥ 10 and having a major peak above 23°C.

The prior art described above requires the use of interesterified fats and oils as well as application of high melting lipid component to achieve physical functionalities (for e.g. crystallization speed and harder texture) of low saturated confectionery coatings. Also the prior art does not show how to further substantially reduce the SFA level in a coating composition for frozen confection.

There is a need to have coatings for frozen confections where the physical attributes of the coating meet the requirements of the parameters, e.g. dripping and setting time, pick-up weight, plastic viscosity and yield value without impact on coating breakage or bleeding.

Furthermore, there is a need for a reduced amount SFA in a frozen confectionery coating while maintaining the properties discussed above.

### Object of the invention

It is thus the object of present invention to provide a reduced SFA coating for frozen confectionery products, said coating having physical properties acceptable for the consumers.

A second object the present invention is to provide a coating composition for frozen confectionery with acceptable processing characteristics.

### Summary of the invention

The present invention allows the production of low SFA compound coatings for frozen confection which exhibits good and comparable textural properties as traditional compound coatings containing significant amount of SFA. The low SFA fat blends developed in accordance with the current invention can achieve a SFA level from fat and oil additives that is reduced up to 50% compared to conventional compound coatings while maintaining snap properties. The coating composition according to the invention has an SFA level from fat and oil additives of less than 25% SFA by weight, compared to 30 to 60% by weight in regular frozen confection compound coatings.

The invention furthermore allows the SFA level to be reduced as low as 14 to 15% wt. SFA, still with satisfactory coating manufacturing, storage/handling and application of the coating.

According to a first aspect the present invention relates to a composition for coating a frozen confection, the composition comprising,
expressed in weight % based on the total weight of the coating,
40 to 65 wt% of fat, which comprises a fat blend of hard fat and liquid oil with a high oleic content of >70%, and
35 to 60 wt% of non-fat solids,
wherein, the coating composition comprises,
   less than 25 wt% of saturated fatty acid,
   10-60 wt%, preferably 20-40% of monounsaturated fatty acid and
   less than 10%, preferably less than 5% of polyunsaturated fatty acid, and
wherein, the saturated fatty acid comprises between 16-24 C-atoms and the unsaturated fatty acid contains 18 C atoms or more than 18 C atoms, wherein the composition only contains non-interesterified fat and oil and is free of lauric fat, and wherein the fat blend crystallizes in a first and second crystallization step at a temperature of-15°C.

It has surprisingly been found that the coating composition according to the invention can be used to coat frozen confection although it is expected that the solidification of the coating will be slower due to the larger amount of liquid oils added in the coating composition. Furthermore, for coating containing very low level of SFA e.g. about 15% SFA, with increased amount of liquid oil the amount of hard fat crystallizing is comparatively less. Even for such coatings though the setting time or crystallization time is longer, it has been found that frozen confection products can be coated and wrapped.

It has been found that the coating according to the invention meets the requirements of dripping and setting time, pick-up weight, plastic viscosity, yield value without impact on coating breakage or cracks.

In a second aspect the present invention relates to a process for producing a coating composition as described here wherein said process comprising the steps:
providing the non-fat solids, the hard fat and the
liquid oil, melting the hard fat,
mixing non-fat solids with at least part of the melted hard fat and/or liquid oil
and obtaining a mixture of hard fat/oil and non-fat solids,
refining the mixture of hard fat and/or liquid oil and non-fat solids to reduce the particle, preferably to a particle size to below 40 microns,
adding any remaining fat/oil to the refined mixture and
optionally adding emulsifier before the refining, to the refined mixture and/or to the mixture with the remaining fat/oil.

The invention furthermore relates to a process for producing an at least partly coated frozen confection, and to an at least partly coated frozen confection with a coating as herein described.

### Brief description of the drawings

Figure 1 shows schematic diagram of the "two-step crystallization' process in low SFA coating used to coat a frozen confection
Figure 2 shows the evolution of Solid fat content of frozen confection coating fat blends with time, exhibiting different SFA content: (A) Control blend of coconut oil blended with palm olein, (B) Low SFA commercial ice-cream coating fats of palm mid fraction blended with Sunflower oil (1a-1f), and (C) Palm fraction blended with High Oleic Sunflower oil (2a-2f). All the blends were crystallized isothermally at -15°C.
Figure 3 shows %SFA content and textural hardness of the different fat blends measured by penetrometry at room temperature after crystallizing overnight at -15°C.
Figure 4: Inspection of setting time (s) of a low SFA coating described in this invention after dipping a frozen confection using nitrile hand gloves (A-C) followed by wrapping (D-G) and evaluation of mechanical resistance of the frozen confections (H-J).

### Detailed description of the invention

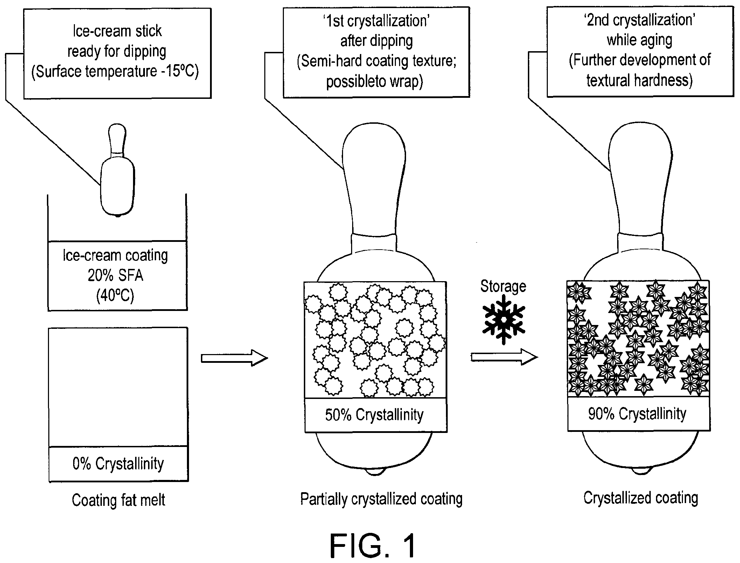

In accordance with the present invention it was found that liquid oils with high oleic content (> 70%) (e.g. High Oleic Sunflower oil) can contribute to the structuring or development of fat crystal network leading to higher solid fat content which provides hard textural properties. This allows further reduction of amount of SFA in the fat blends without compromising the hardness or snap properties. As shown in Figure 1, in the present invention coating composition, an initial crystallization step can be achieved at a very low SFA level (i.e. 20%), which generates sufficient amount of solid fat content (∼50%) or crystallinity within 2 minutes of crystallization. Then the solid fat content or crystallinity of the coating can be further increased (∼90%) via a second crystallization step with adequate crystallization time. Surprisingly, it has been found that the early crystallization step would be sufficient enough to properly coat and wrap a frozen confection while the second crystallization step can occur as the frozen confection will continue to age in the storage units. So the frozen confection will be hard and provide similar snappiness like conventional high SFA coatings at the time of consumption.

Though the crystallization properties of liquid vegetable oils high in oleic content are known, structuring capabilities of the oils at subzero temperatures in a low SFA system are not. As described earlier, the textural properties of the coatings are mainly dependent on the crystallization/crystal packing of the hard fat and not from the liquid oils. Hence, generation of secondary fat crystal structure using liquid oil to improve the hardness or snap properties of the coatings has not been described previously. It is of real advantage, as with simple substitution of liquid oils having high oleic content, when blended with low SFA amounts in frozen confection compound coatings can generate crystal structure and textural hardness.

In the present context hard fat means that it has 70 %, preferably above 75% of solid fat at ambient temperature i.e. about 20 °C.

In the present context a hard palm mid fraction is a fraction produced via two-stage fractionation of palm oil, which has at least higher than 70% of solid fat at ambient temperature i.e. about 20 °C and less than 5% of solid fat content above 35°C.

Further in the present context liquid oil means that the oil is liquid at ambient temperature i.e. about 20 °C and contain less than 5% of solid fat content at 0°C.

In the present context a "two step crystallization" means two different events of crystallization occurring with isothermal holding time at particular temperature. It has been found that the first step is primarily crystallization of the hard fats, while the second crystallization is primarily from the liquid oils, said crystallization is only obtained after a period of time.

In the coating composition according to the invention the composition comprises 40 to 65 wt% of fat, which comprises a fat blend of hard fat and liquid oil with a high oleic content of >70%. Below 30 wt% of fat the coating with this composition will be very viscous and not processable whereas above 80 wt % of fat the coating will not give the consumers a pleasant eating experience.

According to the invention the composition only contains non-interesterified fat and oil. It has surprisingly been found that it is possible to obtain a lower SFA coatings with comparable or better textural properties with non-interesterified fat. In the present context non-interesterified fat and oil is a fat or oil which has not been subject to interesterification, in particular interesterification involving an acyl-rearrangement reaction on the glycerol molecule in presence of chemical catalyst or enzymes.

Furthermore, in accordance with the invention the coating is free of lauric fat. The advantage is a reduced SFA level in the coating and a retention of similar textural properties.

With the coating composition according to the invention it is possible to obtain a coating which has less than 25 wt% of SFA. Even coatings with less than 20 wt. % SFA may advantageously be made with the coating composition according to the invention. Also coatings with less than 15 wt. % of saturated fatty acids may be obtained. A preferred level of SFA in the coating composition is 20 to 22 wt. % of saturated fatty acids.

The coating composition according to the invention also comprises 10-60 wt%, preferably 20-40% of monounsaturated fatty acid and less than 10 wt%, preferably less than 5% of polyunsaturated fatty acid.

The coating composition according to the invention comprises 40 to 65 wt % of fat, more preferably 40 to 58 wt % of fat, and 35 to 60 wt % non-fat solids, more preferably 42 to 60 wt % of non-fat solids. This range of fat content contributes to achieve appropriate viscosity (along with addition of limited amount of emulsifiers) and preferred thickness of coating in frozen confections.

It is furthermore preferred that the fat blend of hard fat and liquid oil comprises 10 to 50 wt % of hard fat, more preferably 30 to 40 wt% of hard fat, and 10 to 50 wt % of liquid oil, more preferably 10 to 25 wt. % of liquid fat oil based on the weight of the coating. With more than 50 wt. % of liquid oil the coating will have a low melting point and be softer resulting in less resistance against temperature fluctuation during transportation and faster melting in hand when consumed.

The fat blend in the coating according to the invention crystallizes in a first and second crystallization step at a temperature of -15°C and below. It has been found that the time between the first and second crystallizations can be regulated depending on the temperature. Lower the temperature; the faster is the second crystallization event (i.e.crystallization of the liquid triacylglycerols). Temperatures higher than -15°C e.g. -10°C are not suitable as it retards the second crystallization step of the blend and is close to the melting temperature of the liquid fraction in the fat blend (i.e. -5°C to 5°C). Temperature higher than -10°C is also negatively affects the final textural properties of the coating.

It has been found that the fat blends according to the invention at a temperature of - 15°C, displays a solid fat content of 20 to 50% within 2 min. of crystallization. Furthermore, a solid fat content is 70 to 85 % after 60 min of crystallization.

Advantageously, the hard fat is selected from the group consisting of: palm oil hard fractions including stearin and mid fractions, shea stearin, interesterified palm oil hard fractions including stearin and mid fractions, interesterified shea stearin, cocoa butter, cocoa butter equivalents, cocoa butter replacers, or a combination thereof Any oil mid fraction still hard at 20°C is considered a hard fat in the present context.

In a preferred embodiment of the invention, the hard fat is hard palm mid fraction comprising above 60%, preferably above 64% of saturated fatty acid, C16 fatty acids which amount to 55 % or more of the total fatty acids of the hard fat, and having a solid fat content at a temperature of 20°C above 70%, preferably above 75%. The moderate amount of SFA present in the hard fats provides sufficient solid fat content after the 'first step' of crystallization of the compound coating. This in turn gives a mechanical resistance to the coatings during further processing (for e.g. wrapping and transportation).

Palm mid fractions are commercially available e.g. Ertifresh 100B from Fujioil Europe; Palmel 35 from Fujioil USA; and Creamelt 900 from Loders Croklaan.

The liquid oil may advantageously be selected from the group consisting of: high oleic sunflower oil, high stearic high oleic sunflower oil, high oleic safflower oil, high oleic soybean oil, high oleic rapeseed oil, high oleic canola oil, high oleic algal oil, high oleic palm oil, high oleic peanut oil, olive oil, macademia nut oil, moringa oleifera seed oil, hazelnut oil, avocado oil or a combination thereof.

In a particular preferred embodiment of the invention the liquid oil is high oleic sunflower oil, high oleic soybean or high oleic rapeseed oil such as high oleic canola oil comprising above 70 %, preferably above 80% of monounsaturated fatty acid, below 10%, preferably below 5% of polyunsaturated fatty acid, in the liquid oil, displaying below 5% of solid fat content at 0°C, and wherein the unsaturated fatty acid contains 18C-atoms or more than 18C-atoms. Higher content of monounsaturated fatty acid (i.e. fatty acid with one double bond) in oils increases the oil melting temperature (-5°C to 5°C) which in turn allows the oil to solidify while providing a crystalline structure that develops around -15°C and below. Higher amount of polyunsaturated fatty acids (i.e. fatty acid with more than one double bond) in oils lead to decrease the overall melting temperature (below -20°C), hence do not crystallize at higher temperatures.

The coating composition according to the invention comprises 35 to 60 wt. % non-fat solids. The non-fat solids are preferably selected from the group consisting of: sugar, fibres, cocoa powder, milk powder, emulsifier and one or more flavours. The non-fat solids provide structure, flavour and colour to the coating.

In the present context the fat phase includes the in cocoa powder and milk powders. The fat in these powder are calculated in to the amounts of fat in the composition.

According to the present invention, the composition may comprise 0.1 to 2 wt. % of emulsifiers selected from sunflower lecithin, soya lecithin, polyglycerol polyricinoleate (PGPR; E476), ammonium phosphatide (YN; E442) or a combination thereof.

For chocolate flavoured coating the amounts of non-fat cocoa solids in the coating composition is below 30 wt. %, preferably from 0 to 15 wt. %, more preferably from 10 to 20 wt. %. For milk chocolate flavoured coating it is preferred that the amount of no-fat milk solids for milk chocolate is below 20 wt. %, preferably from 0 to 12 wt. %. To obtain other coatings no cocoa powder might be included at all.

A composition according to the invention may further comprise a structuring agent in an amount sufficient to provide strength and faster crystallization kinetic properties to the coating. The structuring agent may be agent can be a monoacylglycerols, monoacylglycerol ester, diacylglycerols, sorbitan fatty acid ester, waxes, behenic acid, palm stearin or a combination thereof.

It is preferred that the structuring agent is present in an amount of between about 0.2% and 3% by weight of the coating.

In particular preferred composition according to the invention, the coatings developed comprises a palm oil fraction, low SFA liquid oil and optionally, a structuring agent. Figure 1 shows the evolution of solid fat content (SFC) of frozen confection coating fat blends with time, exhibiting different SFA content. The blends were crystallized isothermally at -15°C.

Figure 1, gives an overview of the crystallization kinetics or solid fat development of a low SFA fat blend developed in the current invention with time (at -15°C) when compared to a conventional high SFA fat blend and existing low SFA ice-cream coating fat blends. High SFA containing fats crystallize rapidly at lower temperatures displaying rapid increase in the solid fat content (>90%) and provides hard textural properties. As the SFA level is decreased by blending with liquid oils (E.g. sunflower 30 oil), there is always a compromise with the development of solid fat (i.e. crystallization kinetics) and as well as good hardness, brittleness or snap properties. This is usually due to the dependence on the crystallization and packing properties of the SFAs available for generation of hard crystal structures and not on the added liquid oils. As common liquid oils have higher unsaturation, they crystallize slowly at very low temperatures (> -40°C). Hence, it is very difficult to generate structures with liquid oils. Existing low SFA frozen confection fat blend (Figure 1) containing sunflower oil or other liquid oils with higher amounts of polyunsaturated fatty acids (30 to 70%) can only achieve comparable hardness or snap to that of a high SFA fat blend at 50% SFA content (in fat phase).

Solids are preferably fillers such as fillers selected from the group selected from the group consisting of: sugar, fibers, cocoa powder, milk powder, emulsifier and one or more flavours.

Even with use of high amount of low SFA oil in the coating formulations, the hard fat fraction is sufficient to allow proper application on coated frozen confections. Contrary to the flexible coating obtained by previous art (e.g. as described in EP0783250B1), with the present invention a hard texture is obtained by making use of the slow crystallization properties of the low SFA oil high in monounsaturated fatty acid during aging in the storage freezer. This ensures to deliver harder texture when consumed. Balance in proportion of liquid oil in the compound coatings is required in order to provide the hard texture and melt behaviour compatible with frozen confection consumption by consumer.

The composition according to the present invention may be combined with known techniques to reduce the fat and SFA (saturated fatty acid) content of chocolate containing coating: EP2099313 (Nestec), and EP2367441 (Unilever). These patents neither address the problem of reducing the amount of SFA below 25% in compound coatings while maintaining the absolute quantity of fat.

Fat and sugars are homogenously mixed within the composition for coating a frozen confection. Solidification step of said composition is related to the crystallization of fat phase. Crystallization of fat phase will be influenced by the presence of other molecules, and any modification in the composition may have an influence on this crystallization/solidification step. Texture (snap or brittleness) of the coating of a frozen confection may be considered as a driver for consumer preference, therefore it is important to maintain this characteristic.

Advantageously the coating composition comprises 40 to 60 wt. % fat comprising a blend of 9 to 38 wt. % hard fat and, 16 to 20 wt. % liquid oil, 30 to 40 wt. % sugar, 0 to 15 wt. % cocoa powder, and 0 to 12 wt. % of non-fat milk solids.

In one particular preferred embodiment of the invention, the liquid oil is high oleic sunflower oil. The sunflower is particularly suitable in the scope of the present invention because they have a low SFA content, no off flavour and are reasonably priced. According to another embodiment, the composition of the present invention may further comprise from 2 to 30 wt. %, preferably below 25wt. % cocoa solids non-fat.

Below 2% the taste of cocoa will not be strong enough to be perceived by consumers as cocoa flavour; more than 30 % is usually not suitable due to a very strong and bitter taste.

Furthermore, the composition according to the present invention may in a preferred embodiment comprise from 1 to 20 wt. % non-fat milk solids. Below 1% non-fat milk solids, the colour, flavour and texture of the composition is not satisfactory from a sensory point of view. Above 20% non-fat milk solids, no additional benefit is achieved.

In another embodiment the invention relates to a process for producing a coating composition according to any of the preceding claims, wherein said process comprising the steps: providing the non-fat solids, the hard fat and the liquid oil, melting the hard fat, mixing non-fat solids with the at least part of the melted hard fat and obtaining a mixture of hard fat and non-fat solids, refining the mixture of hard fat and non-fat solids by milling to reduce the particle, preferably to a particle size to below 40 microns, adding the liquid oil to the refined mixture and optionally adding emulsifier to the refined mixture and/or the mixture with the liquid oil.

In an alternative process of the invention the non-fat solids can be pre-milled in a separate process-step (e.g. by the use of air-classifier mills). The pre-milling step can then fully or partly replace the refining of the mixture of hard fat and non-fat solids by milling to reduce the particle.

In a further embodiment the invention relates process for producing an at least partly coated frozen confection, the process comprising providing a coating composition as described herein according to the invention and coating a frozen composition.

The invention also relates to a frozen confection at least partly coated with a composition to the invention.

Preferably, the frozen confection according to the present invention may have a coating thickness from 0.5 to 5 mm.

Furthermore, the frozen confection according to the present invention may be ice cream.

### EXAMPLES

By way of example and not limitation, the following examples are illustrative of various embodiments of the present disclosure.

### Fat Analysis:

Fats were analysed with standard methods:
The fatty acid composition was done using Gas Chromatography, IUPAC method 2.304. The fatty acids are expressed as % fatty acids based on fat. For fat blends the fatty acids of each fat was determined and then tabulated mathematically to arrive at the blend composition.

The solid fat content was determined using pulsed NMR (Nuclear Magnetic Resonance), Minispec mq20 NMR Analyzer, Bruker Biospin GMBH (Rheinstetten, Germany) using ISO-8292-1D method, non-tempered and with slight modification in time as mentioned below. Supplier standards which had solids at 0%, 31.1% and 72.8% solids were used to calibrate the equipment.

Approximately 2g of well melted fat was placed in a 10 mm NMR tube; samples were then pre-treated prior to testing to make sure it is fully melted. The fats were not tempered, heated to 60 °C, and analyzed. Samples were held at 30 min at various temperatures (0, 10, 20, 25, 30, 35, 37 and 40°C), and the values at each temperature was read in the NMR. Samples were run in duplicates, and the values were averaged. Isothermal crystallization was carried out at -15°C. Samples were maintained at -15°C and solid fat content was recorded manually at defined intervals.

### Example 1:

Table 1 and 2 shows the specification for different fat and oil samples used where hard palm mid fraction and High Oleic Sunflower oil (HOSO) relates to the present invention and rest are comparative samples.

**Table 1: Specifications of fat samples**

| **Specifications** | **Samples** | | | | |
|---|---|---|---|---|---|
| | **Coconut oil** | **Palm olein** | **Low SFA IC fat 1** | **Low SFA IC fat 2** | **Hard Palm mid fraction** |
| Slip melting point (°C) | 22 | 22 | 27 | 18 | 35 |
| Iodine value (gI2/100g) | 10 | 57 | 50 | 61 | 35 |
| Saturated fatty acids (%) | 90 | 45 | 51 | 44 | 64 |
| Monounsaturated fatty acids (%) | 7 | 44 | 39 | 44 | 32 |
| Polyunsaturated fatty acids (%) | 3 | 11 | 10 | 12 | 4 |
| Solid fat content (%) | 20°C - 36 | 20°C - 8 | 20°C - 25 | 20°C - 3 | 20°C - 81 |
| | | | | | 25°C - 67 |
| | 25°C - <1 | 25°C - <1 | 25°C - 10 | 25°C - <1 | 30°C - 19 |
| | | | 30°C - <1 | | 35°C - 2 |

**Table 2: Specification of oil samples**

| **Samples** | **Fatty acids (%)** | | |
|---|---|---|---|
| | **Saturated** | **Monounsaturated** | **Polyunsaturated** |
| Sunflower oil (SO) | 10 | 20 | 70 |
| High Oleic Sunflower oil (HOSO) | 8 | 81 | 11 |

A series of fat blends were prepared as shown in Table 3. The blends comprise palm oil fraction which has been diluted to obtain different SFA levels (25-50%) using Sunflower oil (SO) or High Oleic Sunflower oil (HOSO). It is to be noted that the Blend 1 (a-f) are comparative blends. The investigated blends were compared with a control prepared using coconut oil and palm olein containing higher levels of SFA (76.5%) and existing 2 commercial low SFA ice- cream coating fat with 51 and 44% SFA respectively.

**Table 3: %SFA content of the fat blends**

| **Fat blends** | **Proportion of fats** | **SFA Content (%)** |
|---|---|---|
| Control blend | Coconut oil (70%) + Palm olein (30%) | 76.5 |
| Blend 1 (a-f) | Fractionated Palm Oil + SO | 25-50 |
| Blend 2 (a-f) | Fractionated Palm Oil + HOSF | 25-50 |

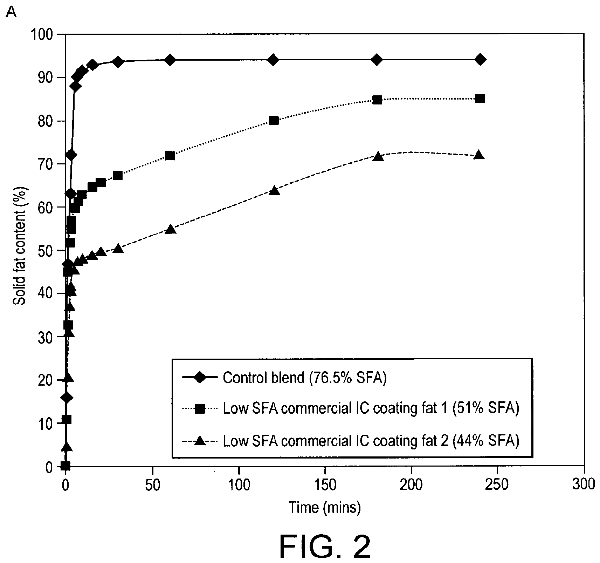

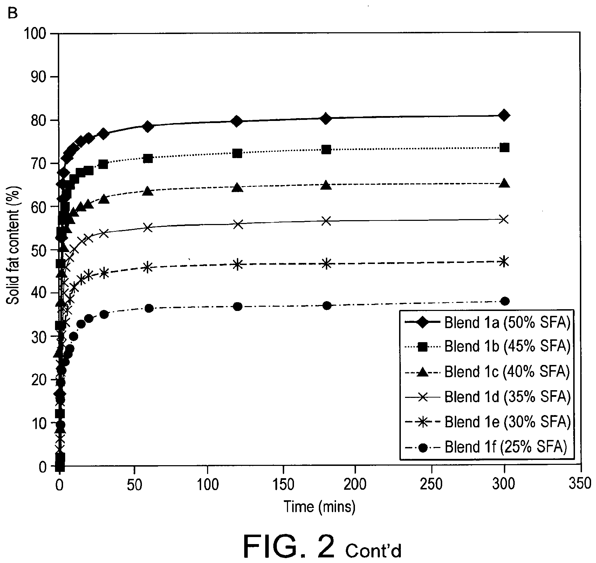

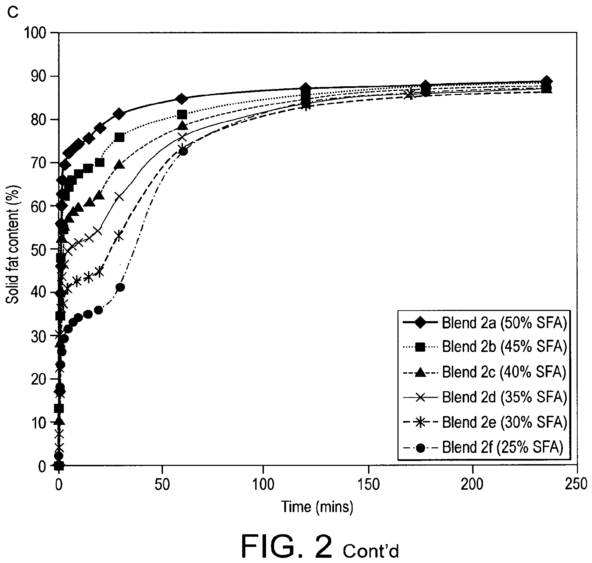

It is clearly evident from figure 2A, the control blend containing high amount of SFA (76.5%) displayed faster crystallization kinetics achieving high solid fat content (90%) within a minute of crystallization at -15°C. However, low SFA commercial ice-cream fats displayed lower solid fat content which was proportional to the amount of SFA present in the fats at -15°C. Similar phenomenon was found in the fat blends with reduced SFA content prepared using fractionated palm oil and vegetable oil like SO (Blend 1a-f), the amount of solid fat content decreased with reduced SFA (Figure 2B).. No increase in the solid fat profiles of the blends was found even after holding 5 h at - 15°C. However, surprisingly a reverse phenomenon was found when the low SFA fat blends were prepared using HOSO (Figure 2C, Blend 2a-2f). Despite variation in SFA levels, all the blends displayed "two-step' crystallization and was able to achieve similar solid fat content (∼85%) after holding 1 to2 h at -15°C.

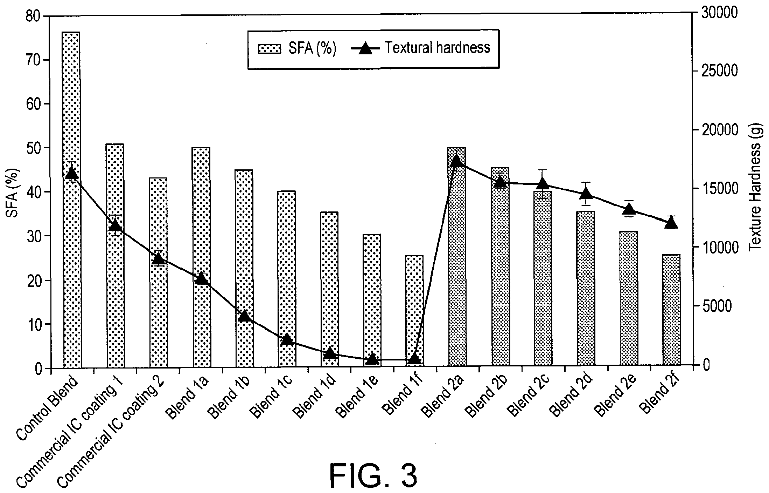

Figure 3 shows %SFA content and textural hardness of the different fat blends measured by penetrometry after crystallizing overnight at -15°C. Penetrometry is a conventional method to evaluate the textural hardness of crystallized fats. The low SFA HOSO blends displayed comparable textural hardness with the control blend and much higher hardness than that of the low SFA commercial Ice-cream fats and blends diluted with SO.

### Example 2

Fat compositions (Fat blend 3-8) were prepared by blending different hard fats and liquid oils illustrated in Table 1, 2 and 4. Fat blend 3-5 are comparative compositions whereas fat blend 6-8 are from the present invention. All the fat blends contained similar SFA content of 40%.

**Table 4: Specification of fat samples**

| **Specifications** | **Samples** | | |
|---|---|---|---|
| | **Shea stearin** | **Cocoa Butter** | **Palm stearin** |
| Slip melting point (°C) | 43 | 34 | 52 |
| Iodine value (gI2/100g) | 35 | 35 | 34 |
| Saturated fatty acids (%) | 64 | 64 | 67 |
| Monounsaturated fatty acids (%) | 34 | 34 | 27 |
| Polyunsaturated fatty acids (%) | 2 | 2 | 6 |
| Solid fat content (%) | 20°C - 80 | 20°C - 76 | 20°C - 60 |
| | 25°C - 68 | 25°C - 55 | 30°C - 40 |
| | 30°C - 45 | 30°C - 32 | |
| | 35°C - 5 | 35°C - <1 | |

Fat blend 3 = 51 wt% Hard Palm mid fraction + 5 wt% Shea stearin + 44 wt% SO
Fat blend 4 = 50 wt% Hard Palm mid fraction + 5 wt% Cocoa Butter + 45 wt% SO
Fat blend 5 = 51 wt% Hard Palm mid fraction + 5 wt% Palm stearin + 44 wt% SO
Fat blend 6 = 52 wt% Hard Palm mid fraction + 5 wt% Shea stearin + 43 wt% HOSO
Fat blend 7 = 52 wt% Hard Palm mid fraction + 5 wt% Cocoa Butter + 43 wt% HOSO
Fat blend 8 = 52.5 wt% Hard Palm mid fraction + 5 wt% Palm stearin + 42.5 wt% HOSO

All the fat blends (3-8) displayed similar levels of SFC i.e. ∼45% after 2 min of crystallization at -15°C (Table 5). Further after 60 min of crystallization the comparative fat blends (3-5) containing SO, showed no increase in the SFC profiles even after 5 hr holding at -15°C. However, it was surprisingly found that fat blends (6-8) containing HOSO and similar levels of SFA i.e. 40% as the comparative fat blends (3-5), displayed much higher levels of SFC after 60 min of crystallization at -15°C and continued to increase until 5 hr of holding demonstrating "two-step crystallization' phenomenon (Table 5).

**Table 5: Evolution of Solid fat content of frozen confection coating fat blends at -15°C with time containing similar SFA level (40%)**

| Samples | % SFC after 2 min | % SFC after 60 min | % SFC after 5 hr |
|---|---|---|---|
| Fat blend 3 | 44 | 62 | 64 |
| Fat blend 4 | 43 | 61 | 63 |
| Fat blend 5 | 44 | 61 | 63 |
| Fat blend 6 | 46 | 74 | 84 |
| Fat blend 7 | 46 | 74 | 85 |
| Fat blend 8 | 48 | 69 | 84 |

Table 6 illustrates textural hardness of the different fat blends (3-8) measured by penetrometry after crystallizing overnight at -15°C. Surprisingly, the fat blends containing HOSO (6-8) displayed higher textural hardness compared to fat blends diluted with SO (3-5).

**Table 6: Textural hardness**

| Samples | Textural hardness (g) |
|---|---|
| Fat blend 3 | 3943±424 |
| Fat blend 4 | 3197±416 |
| Fat blend 5 | 2873±318 |
| Fat blend 6 | 9280±1200 |
| Fat blend 7 | 9812±1075 |
| Fat blend 8 | 7910±731 |

### Example 3

Fat compositions (Fat blend 9-12) included in the present invention were prepared by blending hard palm mid fraction and liquid oils illustrated in Table 1 and 7. All the fat blends contained similar SFA content of 40%.

**Table 7: Specification of oil samples**

| **Samples** | **Fatty acids (%)** | | |
|---|---|---|---|
| | **Saturated** | **Monounsaturated** | **Polyunsaturated** |
| High Oleic Soybean oil (HOSBO) | 10 | 75 | 15 |
| High Oleic Canola oil (HOCO) | 8 | 70 | 22 |
| High Oleic Algal oil (HOAO) | 10 | 85 | 5 |
| Olive oil (OO) | 14 | 72 | 14 |

Fat blend 9 = 57 wt% Hard Palm mid fraction + 43 wt% HOSBO
Fat blend 10 = 57 wt% Hard Palm mid fraction + 43 wt% HOCO
Fat blend 11 = 57 wt% Hard Palm mid fraction + 43 wt% HOAO
Fat blend 12 = 52 wt% Hard Palm mid fraction + 48 wt% OO

All the fat blends (9-12) displayed similar levels of SFC i.e. ∼47% after 2 min of crystallization at -15°C (Table 8). However, it was surprisingly found that all fat blends displayed higher levels of SFC after 60 min of crystallization at -15°C and continued to increase until 5 hr of holding demonstrating "two-step crystallization' phenomenon (Table 8).

**Table 8: Evolution of Solid fat content of frozen confection coating fat blends at -15°C with time containing similar SFA level (40%)**

| Samples | % SFC after 2 min | % SFC after 60 min | % SFC after 5 hr |
|---|---|---|---|
| Fat blend 9 | 47 | 70 | 84 |
| Fat blend 10 | 48 | 66 | 82 |
| Fat blend 11 | 47 | 87 | 94 |
| Fat blend 12 | 43 | 80 | 88 |

Table 9 illustrates textural hardness of the different fat blends (9-12) measured by penetrometry after crystallizing overnight at -15°C. Surprisingly, the fat blends containing liquid oil higher in monounsaturates (9-12) displayed higher textural hardness compared to comparative fat blends mentioned in earlier examples (Figure 3; Table 6).

**Table 9: Textural hardness**

| Samples | Textural hardness (g) |
|---|---|
| Fat blend 9 | 12730±320 |
| Fat blend 10 | 11124±1500 |
| Fat blend 11 | 17118±269 |
| Fat blend 12 | 13852±1028 |

### Example 4

Fat compositions (Fat blend 13-16) included in the present invention were prepared by blending hard palm mid fraction and liquid oils illustrated in Table 1, 2 and 10. All the fat blends contained similar SFA content of 40%.

**Table 10: Specification of oil samples**

| **Samples** | **Fatty acids (%)** | | |
|---|---|---|---|
| | **Saturated** | **Monounsaturated** | **Polyunsaturated** |
| High Oleic High stearic oil (HO-HSSO) | 36 | 56 | 6 |
| Hazelnut oil (HO) | 12 | 75 | 13 |
| Macademia oil (MO) | 10 | 82 | 8 |
| Avocado oil (AO) | 12 | 75 | 13 |

Fat blend 13 = 52 wt% Hard Palm mid fraction + 38 wt% HOSO + 10 wt% HO-HSSO
Fat blend 14 = 56 wt% Hard Palm mid fraction + 34 wt% HOSO + 10 wt% HO
Fat blend 15 = 56 wt% Hard Palm mid fraction + 34 wt% HOSO + 10 wt% MO
Fat blend 16 = 56 wt% Hard Palm mid fraction + 34 wt% HOSO + 10 wt% AO

All the fat blends (13-16) displayed similar levels of SFC i.e. ∼46% after 2 min of crystallization at -15°C (Table 11). However, it was surprisingly found that all fat blends displayed higher levels of SFC after 60 min of crystallization at -15°C and continued to increase until 5 hr of holding demonstrating "two-step crystallization' phenomenon (Table 11).

**Table 11: Evolution of Solid fat content of frozen confection coating fat blends at -15°C with time containing similar SFA level (40%)**

| Samples | % SFC after 2 min | % SFC after 60 min | % SFC after 5 hr |
|---|---|---|---|
| Fat blend 13 | 45 | 71 | 84 |
| Fat blend 14 | 47 | 74 | 85 |
| Fat blend 15 | 46 | 67 | 83 |
| Fat blend 16 | 46 | 67 | 81 |

Table 12 illustrates textural hardness of the different fat blends (13-16) measured by penetrometry after crystallizing overnight at -15°C. Surprisingly, the fat blends containing liquid oil higher in monounsaturates (13-16) displayed higher textural hardness compared to comparative fat blends mentioned in earlier examples (Figure 3; Table 6).

**Table 12: Textural hardness**

| Samples | Textural hardness (g) |
|---|---|
| Fat blend 13 | 12421±1510 |
| Fat blend 14 | 13237±927 |
| Fat blend 15 | 12623±160 |
| Fat blend 16 | 12977±329 |

### Example 5

Frozen confection coating recipes with varying SFA and fat content prepared at pilot plant scale has been elaborated in Table 13. Low SFA frozen confection coating containing SO (Recipe 1; comparative sample) and three different low SFA Ice confection coatings from the present invention (Recipe 2, 3 and 4) were prepared for feasibility test. The compound coatings were made by first blending the dry ingredients with part of the fat blend, followed by refining and treating the mixture in a Stephan mixer at 50°C where the residual fat and the lecithin was added and mixed into the blend.

**Table 13: Ice confection coating recipes with varying SFA and fat content**

| **Ingredients** | **Recipe 1** | **Recipe 2** | **Recipe 3** | **Recipe 4** |
|---|---|---|---|---|
| Hard palm mid fraction | 45.7 | 31.8 | 28.9 | 26 |
| SO | 10.7 | - | - | - |
| HOSO | - | 21.8 | 19.6 | 17.4 |
| Sugar | 29.9 | 32.0 | 35.6 | 39.1 |
| Milk Skimmed Powder | 4.2 | 4.5 | 5.0 | 5.5 |
| Cocoa Powder (10-12% Fat) | 9 | 9.6 | 10.7 | 11.7 |
| Lecithin | 0.5 | 0.5 | 0.5 | 0.7 |
| Total fat | 58 | 55 | 50 | 45 |
| %SFA in the recipe | 30.1 | 22 | 20 | 18 |
| Particle size (D₉₀) | 28 | 30 | 24 | 30 |

### Example 6

This example provides information regarding the rheological properties (i.e. Plastic viscosity and Yield stress) of the coating recipes with varying SFA and fat content (Table 13). The rheological properties were measured using Physica MCR (rheometer model) 501-Anton Paar (Germany) system with geometry: CC27/S (Serial Number: 20689).

Due to variation in fat content in the coating recipes, the overall proportion of the solid ingredients (Sugar, Cocoa powder and Skimmed milk powder) was different. However, the ratio between the solid ingredients across the recipes was kept the same. Impact of varying the ratio of the solid ingredients were observed not to significantly impact the plastic viscosity and pick-up weight, at similar fat content (internal evaluation). Although plastic viscosity and pick-up weight increased with lower fat content.

**Table 14: Plastic viscosity (Pa.s) and Yield stress (Pa) of the different recipes**

| **Temperature (°C)** | **Plastic viscosity (Pa.s)** | **Yield stress (Pa)** |
|---|---|---|
| **Recipe 1** | | |
| 45 | 0.19 | 0.30 |
| 40 | 0.21 | 0.32 |
| 35 | 0.26 | 0.35 |
| 30 | 0.31 | 0.40 |

| **Recipe 2** | | |
|---|---|---|
| 45 | 0.20 | 0.30 |
| 40 | 0.23 | 0.33 |
| 35 | 0.27 | 0.36 |
| 30 | 0.32 | 0.40 |

| **Recipe 3** | | |
|---|---|---|
| 45 | 0.34 | 0.58 |
| 40 | 0.40 | 0.61 |
| 35 | 0.46 | 0.66 |
| 30 | 0.56 | 0.73 |

| **Recipe 4** | | |
|---|---|---|
| 45 | 0.60 | 1.22 |
| 40 | 0.69 | 1.28 |
| 35 | 0.80 | 1.36 |
| 30 | 0.95 | 1.48 |

### Example 7

This example gives details of the coating properties of the recipes with varying SFA and fat content. Ice-cream sticks with surface temperature -13°C to -15°C was coated with the different coating recipes (Table 13) by dipping. The coatings were maintained at a constant temperature (e.g. 30, 35, 40 °C) before dipping. Comparison of coating properties between each coating recipes are shown in Table 15.

**Table 15: Comparison of coating properties of the different recipes**

| **Temperature (°C) (s)** | **Pick-up weight (g)** | **Dripping time (s)** | **Setting time** |
|---|---|---|---|
| **Recipe 1** | | | |
| 40 | 15.3 | 13 | 20 |
| 35 | 16.5 | 12 | 16 |
| 30 | 17.7 | 11 | 14 |

| **Recipe 2** | | | |
|---|---|---|---|
| 40 | 14.0 | 12 | 17 |
| 35 | 15.7 | 13 | 19 |
| 30 | 16.9 | 12 | 18 |

| **Recipe 3** | | | |
|---|---|---|---|
| 40 | 18.1 | 21 | 25 |
| 35 | 21.0 | 18 | 21 |
| 30 | 21.2 | 18 | 28 |

| **Recipe 4** | | | |
|---|---|---|---|
| 40 | 23.9 | 26 | 35 |
| 35 | 26.1 | 26 | 34 |
| 30 | 28.1 | 26 | 38 |

The dripping time (i.e. time required to crystallize the coatings on the Ice-cream surface after dipping) and pick-up weight (i.e.amount of coating crystallised on the Ice-cream surface) was found to increase with decrease in the fat content as well as SFA in the coating. This is of no surprise as with lower fat content, plastic viscosity and yield stress of coatings increase (Table 14) However, coating Recipe 2 containing HOSO displayed similar pick-up weight, dripping time and setting time to that of Recipe 1 which contained SO. Both the recipes had comparable fat content but Recipe 2 contained 27% less SFA than that of Recipe 1. (Recipe 4).

The higher plastic viscosity and yield stress value of the recipes with reduced fat content can be controlled via applying other emulsifiers or combination of emulsifiers (for e.g. PGPR or Lecithin and PGPR). It is already known that PGPR reduce dramatically the yield value of compound coatings even at very low dosage (0.2wt. %). The strong effect on the yield value makes it possible to reduce the pick-up of coating per frozen confection and in lowering the fat content of the coating. Higher pick-up weight of the coatings can also be reduced by increasing the dipping temperature of the coatings (for e.g. 45°C). However, care should be taken so that physical properties of the frozen confection are not affected by the higher temperature.

### Example 8

Approximately 30 grams of a coating of composition with recipes 1 to 4 were poured in plastic cups and crystallized for 1 day at -15°C. Then the samples were stored for 1 week at -25°C to stabilize and mimic the industrial frozen confection storage temperature.

After 1 week the hardness of the tablets was measured at room temperature i.e. about 20°C with a TA-HDi texture analyzer from Stable Micro Systems Ltd, Surrey, United Kingdom using a needle probe of 4.15 mm diameter, speed 1 mm/sec and 5 mm penetration. 5 replicates were performed to record the maximum force of penetration. The results obtained are given in table 16.

**Table 16: Textural hardness**

| **measurements Coating recipes** | **Textural Hardness (g)** |
|---|---|
| Recipe 1 | 16550±1000 |
| Recipe 2 | 24120±1000 |
| Recipe 3 | 22360±2500 |
| Recipe 4 | 27171±1200 |

In general, the textural hardness of the recipes increased with decreasing fat and SFA content. All the recipes containing HOSO in the fat blend in accordance with the invention (i.e. Recipe 2 to 4) showed higher textural hardness than that of Recipe 1 (comparative sample) which contained SO and was higher in SFA content.

### Example 9

Frozen confection coating recipes with varying SFA and fat content prepared at pilotplant scale has been elaborated in Table 17. The compound coatings were made by first blending the dry ingredients with part of the fat blend, followed by refining and treating the mixture in a Stephan mixer at 50°C where the residual fat and the emulsifiers (lecithin and PGPR) was added and mixed into the blend.

**Table 17: Ice confection coating recipes with varying SFA and fat content**

| **Ingredients** | **Recipe 5** | **Recipe 6** |
|---|---|---|
| Hard palm mid fraction | 14.06 | 34 |
| HOSO | 16.24 | 42.32 |
| Sugar | 46.81 | 18.30 |
| Milk Skimmed Powder | 8.50 | 2.17 |
| Cocoa Powder (10-12% Fat) | 13.62 | 4.43 |
| Lecithin | 0.5 | - |
| PGPR | 0.2 | - |
| Total fat | 32 | 77 |
| %SFA in the recipe | 11 | 25 |

### Example 10

This example provides information regarding the rheological properties (i.e. Plastic viscosity and Yield stress) of the coating recipes with varying SFA and fat content (Table 18). The rheological properties were measured using Physica MCR (rheometer model) 501-Anton Paar (Germany) system with geometry: CC27/S (Serial Number:20689).

**Table 18: Plastic viscosity (Pa.s) and Yield stress (Pa) of the different recipes**

| **Temperature (°C)** | **Plastic viscosity (Pa.s)** | **Yield stress (Pa)** |
|---|---|---|
| **Recipe 5** | | |
| 40 | 1.59 | 1.43 |
| 35 | 1.93 | 1.54 |
| 30 | 2.41 | 1.77 |

| **Recipe 6** | | |
|---|---|---|
| 40 | 0.05 | 0.03 |
| 35 | 0.06 | 0.04 |
| 30 | 0.07 | 0.05 |

### Example 11

This example gives details of the coating properties of the recipes with varying SFA and fat content. Ice-cream sticks with surface temperature -13°C to -15°C was coated with the different coating recipes (Table 17) by dipping. The coatings were maintained at a constant temperature i.e. 35°C before dipping. Comparison of coating properties between each coating recipes are shown in Table 19.

**Table 19: Comparison of coating properties of the different recipes**

| **Temperature (°C)** | **Pick-up weight (g)** | **Dripping time (s)** | **Setting time (s)** |
|---|---|---|---|
| **Recipe 5:** 35 | 27.3 | 31 | 50 |
| **Recipe 6:** 35 | 8.84 | 9 | 32 |

The dripping time and pick-up weight was found to increase with decrease in the fat content as well as SFA in the coating. This is of no surprise as with lower fat content, plastic viscosity and yield stress of coatings increase (Table 18).

The higher plastic viscosity and yield stress value of the recipes with reduced fat content can be reduced by increasing the dipping temperature of the coatings (for e.g. 40-45°C). However, care should be taken so that physical properties of the frozen confection are not affected by the higher temperature.

### Example 12

After 1 week of storage at -20°C the textural hardness of the coated frozen confection samples was measured at -18°C, where the coated frozen confections were mechanically stressed by bending, using a strength texture apparatus (Zwick Roell Z005, equipped with a 50kN captor). The samples were re-equilibrated at least one minute at - 18°C before measurement. The coated frozen confections were laid on two supports having a cylindrical profile of radius 1.5 mm and being 35 mm apart from each other. The measurements were performed with a constant cross head speed of 2mm/s. 5 replicates were performed to record the maximum force to break the coatings. The results obtained are given in table 20. The textural hardness index is defined as the texture per thickness of the frozen confection coating. The textural hardness index was found to be higher for the recipe containing higher fat and SFA content.

**Table 20: Textural hardness measurements**

| **Coating recipes** | **Textural Hardness index (g/mm)** |
|---|---|
| Recipe 5 | 3882±212 |
| Recipe 6 | 6714±397 |

### Example 13

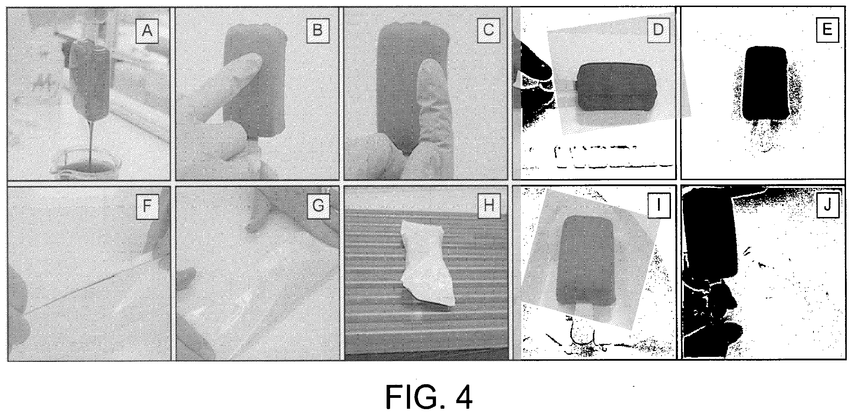

This example provides details regarding the wrapping of the coated frozen confection, wherein the at least partly coated frozen confection is wrapped before the second crystallization phase takes place. Frozen confections after at least partly dipping in the coating recipes (Recipe 1 to 6) described in the previous example were allowed to drip to remove excess coating and hold for complete setting i.e. first crystallization phase (Figure 4A). The individual dripping and setting time of the coating recipes are listed in Table 15 and 19.

After dripping of the excess coatings, setting time of the coatings were calculated by touching coated surface of the frozen confections wearing nitrile hand gloves. Inspection was carried until no traces of the compound coatings were observed to adhere on the gloves. These holding times were recorded as the setting time for particular coating recipes. Finding the correct setting time ensured generation of sufficient solid fat content (i.e. 20 to 50%) after 'first step' of crystallization of the coatings. The coated frozen confections were then placed over a standard stick-on wrapper for wrapping frozen confections and were wrapped as quickly as possible. Figure 4 (A-J) shows inspection of setting time of a low SFA coating (Recipe 2) using nitrile hand gloves followed by manual wrapping and evaluation of mechanical resistance of the frozen confections.

In order to check feasibility of the partially crystallized coatings in terms of mechanical resistance, the wrapped frozen confections were placed on a laboratory benchtop roller mixer (Stuart roller mixer, SRT2) and were kept moving for approximately 5 min (Figure 4H). After 10 min the frozen confections were examined for cosmetic damages i.e. cracks or fractures. No significant damages were observed in any of the frozen confections coated with the coating recipes 1 to 4. This demonstrates that partial 'first step' of crystallization of the coatings was adequate to allow wrapping and further protect during transportation of the frozen confections for storage.

## Claims

1. A composition for coating a frozen confection, the composition comprising, expressed in weight % based on the total weight of the coating, 40 to 65 wt% of fat, which comprises a fat blend of hard fat and liquid oil with a high oleic content of >70%, and 35 to 60 wt% of non-fat solids,
wherein, the coating composition comprises,
less than 25 wt% of saturated fatty acid,
10-60 wt%, preferably 20-40% of monounsaturated fatty acid and
less than 10%, preferably less than 5% of polyunsaturated fatty acid, and
wherein, the saturated fatty acid comprises between 12-24C-atoms and the unsaturated fatty acid contains 18C-atoms or more than 18C-atoms, wherein the composition only contains non-interesterified fat and oil and is free of lauric fat, and wherein the fat blend crystalizes in a first and second crystallization step at a temperature of -15°C.

2. A composition according to claim 1, wherein the coating composition comprises 40 to 58 wt % of fat, and 42 to 60 wt % of non-fat solids.

3. A composition according to claim 1 and 2, wherein the fat blend of hard fat and liquid oil comprises 10 to 50 wt % of hard fat, more preferably 30 to 40 wt% of hard fat, and 10 to 50 wt% of liquid fat, more preferably 10 to 25% of liquid fat based on the weight of the coating.

4. A composition according to claim 1 and 2, wherein the composition further comprise a structuring agent in an amount sufficient to provide strength and faster crystallization kinetic properties to the coating, wherein the structuring agent can be a monoacylglycerol, diacylglycerol, monoacylglycerol ester, sorbitan fatty acid ester, waxes, behenic acid, palm stearin, or a combination thereof.

5. A coating composition according to any of the preceding claims, wherein the fat blend at a temperature of -15°C, displays a solid fat content of,
a) 20 to 50% within 2 min. of crystallization.

6. A composition according to any of the preceding claims, wherein the hard fat is selected from the group consisting of: palm oil hard fractions including stearin and mid fractions, shea stearin, cocoa butter, cocoa butter equivalents, cocoa butter replacers, or a combination thereof.

7. A coating composition according to any of the preceding claims, wherein the hard fat is hard palm mid fraction comprising
a) above 60%, preferably above 64% of saturated fatty acid,
b) C16 fatty acids which amount to 55 % or more of the total fatty acids of the hard fat, and
c) displays above 70%, preferably 75% of solid fat content at 20°C.

8. A composition according to any of the preceding claims, wherein the liquid oil is selected from the group consisting of: high oleic sunflower oil, high stearic high oleic sunflower oil, high oleic safflower oil, high oleic soybean oil, high oleic rapeseed oil such as high oleic canola oil, high oleic algal oil, high oleic palm oil, high oleic peanut oil, olive oil, macademia nut oil, moringa oleifera seed oil, hazelnut oil, avocado oil or a combination thereof.

9. A coating composition according to any of the preceding claims, wherein the liquid oil is high oleic sunflower oil or high oleic soybean comprising
a) above 70%, preferably above 80% of monounsaturated fatty acid
b) below 10%, preferably below 5% of polyunsaturated fatty acid
c) displays below 5% of solid fat content at 0°C,
wherein, the unsaturated fatty acid contains 18C-atoms or more than 18C-atoms.

10. A composition according to any of the preceding claims, wherein the composition comprises 0.1 to 2 wt.% of emulsifiers selected from sunflower lecithin, soya lecithin polyglycerol polyricinoleate (PGPR; E476), ammonium phosphatide (YN; E442) or a combination thereof.

11. A composition according any of the preceding claims, which comprises below 25 wt. % cocoa solids.

12. A composition according to any of the preceding claim which comprises 1 to 20 wt. % non-fat milk solids.

13. A composition according to any of the preceding claims, comprising 40 to 60 wt. % fat comprising a blend of
19 to 38 wt. % hard fat and
16 to 20 wt. % liquid oil, and
30 to 40 wt. % sugar,
0 to 15 wt. % cocoa powder, and
0 to 12 wt. % of non-fat milk solids.

14. A process for producing a coating composition according to any of the preceding claims, wherein said process comprising the steps:
providing the non-fat solids, the hard fat and the liquid oil,
melting the hard fat,
mixing non-fat solids with the at least part of the melted hard fat and
obtaining a mixture of hard fat and non-fat solids,
refining the mixture of hard fat and non-fat solids by milling to reduce the particle, preferably to a particle size to below 40 microns,
adding the liquid oil to the refined mixture and
optionally adding emulsifier to the refined mixture and/or the mixture with the liquid oil.

15. A process for producing an at least partly coated frozen confection, the process comprising providing a coating composition according to any of the preceding claims and coating a frozen composition.

16. A frozen confection at least partly coated with a composition according to any of claims 1 to 12.

## Patentansprüche

1. Zusammensetzung zum Beschichten eines gefrorenen Konfekts, wobei die Zusammensetzung, ausgedrückt in Gew.-%, bezogen auf das Gesamtgewicht der Beschichtung, zu 40 bis 65 Gew.-% Fett, das eine Fettmischung aus Hartfett und flüssigem Öl mit einem hohen Gehalt an Ölsäure von >70 % umfasst, und zu 35 bis 60 Gew.-% Nicht-Fett-Feststoffe umfasst,
wobei die Beschichtungszusammensetzung umfasst
zu weniger als 25 Gew.-% gesättigte Fettsäuren,
zu 10 bis 60 Gew.-%, vorzugsweise zu 20 bis 40 %, einfach ungesättigte Fettsäure und
zu weniger als 10 %, vorzugsweise zu weniger als 5 %, mehrfach ungesättigte Fettsäure, und
wobei die gesättigte Fettsäure zwischen 12-24 C-Atome umfasst und die ungesättigte Fettsäure 18 C-Atome oder mehr als 18 C-Atome enthält, wobei die Zusammensetzung nur nicht umgeestertes Fett und Öl enthält und frei von Laurinfett ist und wobei die Fettmischung in einem ersten und zweiten Kristallisationsschritt bei einer Temperatur von -15 °C kristallisiert.

2. Zusammensetzung nach Anspruch 1, wobei die Beschichtungszusammensetzung zu 40 bis 58 Gew.-% Fett und zu 42 bis 60 Gew.-% Nicht-Fett-Feststoffe umfasst.

3. Zusammensetzung nach Anspruch 1 und 2, wobei die Fettmischung aus Hartfett und flüssigem Öl zu 10 bis 50 Gew.-% Hartfett, mehr bevorzugt zu 30 bis 40 Gew.-% Hartfett, und zu 10 bis 50 Gew.-% flüssiges Fett, stärker bevorzugt zu 10 bis 25 % flüssiges Fett, bezogen auf das Gewicht der Beschichtung, umfasst.

4. Zusammensetzung nach Anspruch 1 und 2, wobei die Zusammensetzung ferner einen Strukturbildner in einer ausreichenden Menge umfasst, um der Beschichtung Festigkeit und schnellere kristallisationskinetische Eigenschaften zu verleihen, wobei der Strukturbildner ein Monoacylglycerin, Diacylglycerin, Monoacylglycerinester, Sorbitanfettsäureester, Wachse, Behensäure, Palmstearin oder eine Kombination davon sein kann.

5. Beschichtungszusammensetzung nach einem der vorstehenden Ansprüche, wobei die Fettmischung bei einer Temperatur von -15 °C einen FettFeststoffgehalt aufweist von
a) 20 bis 50 % innerhalb von 2 min nach der Kristallisation.

6. Zusammensetzung nach einem der vorstehenden Ansprüche, wobei das Hartfett ausgewählt ist aus der Gruppe bestehend aus: harter Palmöl-Fraktionen einschließlich Stearin und Mittelfraktionen, Sheastearin, Kakaobutter, Kakaobutter-Äquivalente, Kakaobutter-Austauscher oder einer Kombination davon.

7. Beschichtungszusammensetzung nach einem der vorstehenden Ansprüche, wobei das Hartfett harte Palm-Mittelfraktion ist, umfassend
a) zu über 60 %, vorzugsweise zu über 64 % gesättigte Fettsäure,
b) C16-Fettsäuren, die 55 % oder mehr der Gesamtfettsäuren des Hartfetts ausmachen, und
c) zu über 70 %, vorzugsweise zu 75 % Fettfeststoffgehalt bei 20 °C aufweisend.

8. Zusammensetzung nach einem der vorstehenden Ansprüche, wobei das flüssige Öl ausgewählt ist aus der Gruppe bestehend aus: Sonnenblumenöl mit hohem Ölsäuregehalt, Sonnenblumenöl mit hohem Stearinsäuregehalt und hohem Ölsäuregehalt, Distelöl mit hohem Ölsäuregehalt, Sojaöl mit hohem Ölsäuregehalt, Rapsöl mit hohem Ölsäuregehalt wie Canolaöl mit hohem Ölsäuregehalt, Algenöl mit hohem Ölsäuregehalt, Palmöl mit hohem Ölsäuregehalt, Erdnussöl mit hohem Ölsäuregehalt, Olivenöl, Macadamianussöl, Moringa oleifera-Samenöl, Haselnussöl, Avocadoöl oder einer Kombination davon.

9. Beschichtungszusammensetzung nach einem der vorstehenden Ansprüche, wobei das flüssige Öl Sonnenblumenöl mit hohem Ölsäuregehalt oder Sojaöl mit hohem Ölsäuregehalt ist, umfassend
a) zu über 70 %, vorzugsweise zu über 80 %, einfach ungesättigte Fettsäure,
b) zu unter 10 %, vorzugsweise zu unter 5 %, mehrfach ungesättigte Fettsäure,
c) und bei 0 °C einen Fettfeststoffgehalt von unter 5 % aufweisend,
wobei die ungesättigte Fettsäure 18 C-Atome oder mehr als 18 C-Atome enthält.

10. Zusammensetzung nach einem der vorstehenden Ansprüche, wobei die Zusammensetzung zu 0,1 bis 2 Gew.-% Emulgatoren umfasst, die ausgewählt sind aus Sonnenblumenlecithin, Sojalecithin-Polyglycerin-Polyricinoleat (PGPR; E476), Ammoniumphosphatid (YN; E442) oder einer Kombination davon.

11. Zusammensetzung nach einem der vorstehenden Ansprüche, die unter 25 Gew.-% Kakaofeststoffe umfasst.

12. Zusammensetzung nach einem der vorstehenden Ansprüche, die zu 1 bis 20 Gew.-% fettfreie Milchfeststoffe umfasst.

13. Zusammensetzung nach einem der vorstehenden Ansprüche, umfassend zu 40 bis 60 Gew.-% Fett, umfassend eine Mischung aus
19 bis 38 Gew.-% Hartfett und
16 bis 20 Gew.-% flüssigem Öl und
30 bis 40 Gew.-% Zucker,
0 bis 15 Gew.-% Kakaopulver und
0 bis 12 Gew.-% fettfreie Milchfeststoffe.

14. Verfahren zum Herstellen einer Beschichtungszusammensetzung nach einem der vorstehenden Ansprüche, wobei das Verfahren die Schritte umfasst:
Bereitstellen der Nicht-Fett-Feststoffe, des Hartfetts und des flüssigen Öls,
Schmelzen des Hartfetts,
Mischen von Nicht-Fett-Feststoffen mit dem mindestens Teil des geschmolzenen Hartfetts und
Erhalten einer Mischung aus Hartfett- und Nicht-Fett-Feststoffen,
Verfeinern der Mischung aus Hartfett- und Nicht-Fett-Feststoffen durch Mahlen, um die Teilchen zu verkleinern, vorzugsweise auf eine Teilchengröße von unter 40 Mikrometer,
Zugeben von flüssigem Öl zu der verfeinerten Mischung und
optional Zugeben von Emulgator zu der verfeinerten Mischung und/oder der Mischung mit dem flüssigen Öl.

15. Verfahren zum Herstellen eines mindestens teilweise beschichteten gefrorenen Konfekts, wobei das Verfahren das Bereitstellen einer Beschichtungszusammensetzung nach einem der vorstehenden Ansprüche und das Beschichten einer gefrorenen Zusammensetzung umfasst.

16. Gefrorenes Konfekt, das mindestens teilweise mit einer Zusammensetzung nach einem der Ansprüche 1 bis 12 beschichtet ist.

## Revendications

1. Composition pour l'enrobage d'une confiserie congelée, la composition comprenant, exprimée en pourcentage en poids par rapport au poids total de l'enrobage, 40 à 65 % en poids de matière grasse, qui comprend un mélange de matières grasses de matière grasse solide et d'huile liquide à haute teneur en acide oléique de > 70 % et 35 % à 60 % de matières sèches non grasses,
dans laquelle, la composition d'enrobage comprend,
moins de 25 % en poids d'acide gras saturé,
10 à 60 % en poids, de préférence 20 à 40 % d'acide gras mono-insaturé et
moins de 10 %, de préférence moins de 5 % d'acide gras polyinsaturé, et
dans laquelle l'acide gras saturé comprend entre 12 et 24 atomes de C et l'acide gras insaturé contient 18 atomes de C ou plus de 18 atomes de C, dans laquelle la composition ne contient que de la matière grasse et de l'huile non interestérifiées et étant exempte de matière grasse laurique et dans laquelle le mélange de matières grasses cristallise dans une première et une seconde étape de cristallisation à une température de -15 °C.

2. Composition selon la revendication 1, dans laquelle la composition d'enrobage comprend 40 à 58 % en poids de matière grasse, et 42 à 60 % en poids de matières sèches non grasses.

3. Composition selon la revendication 1 et 2, dans laquelle le mélange de matières grasses de matière grasse solide et d'huile liquide comprend 10 à 50 % en poids de matière grasse solide, plus préférablement 30 à 40 % en poids de matière grasse solide, et 10 à 50 % en poids de matière grasse liquide, plus préférablement 10 à 25 % de matière grasse liquide par rapport au poids de l'enrobage.

4. Composition selon la revendication 1 et 2, dans laquelle la composition comprend en outre un agent structurant en une quantité suffisante pour fournir à l'enrobage des propriétés de résistance et de cinétique de cristallisation plus rapide, dans laquelle l'agent structurant peut être un monoacylglycérol, un diacylglycérol, un ester de monoacylglycérol, un ester d'acide gras sorbitan, des cires, de l'acide béhénique, de la stéarine de palme, ou une combinaison de ceux-ci.

5. Composition d'enrobage selon l'une quelconque des revendications précédentes, dans laquelle le mélange de matières grasses à une température de -15 °C, présente une teneur en graisse solide de,
a) 20 à 50 % dans les 2 min. de la cristallisation.

6. Composition selon l'une quelconque des revendications précédentes, dans laquelle la matière grasse solide est choisie dans le groupe constitué par : les fractions solides d'huile de palme incluant la stéarine et les fractions moyennes, la stéarine de karité, le beurre de cacao, les équivalents de beurre de cacao, les substituts de beurre de cacao, ou une combinaison de ceux-ci.

7. Composition d'enrobage selon l'une quelconque des revendications précédentes, dans laquelle la matière grasse solide est la fraction moyenne de palme solide comprenant
a) plus de 60 %, de préférence plus de 64 % d'acide gras saturé,
b) une quantité d'acides gras en C16 qui s'élève à 55 % ou plus des acides gras totaux de la matière grasse solide, et
c) présente plus de 70 %, de préférence 75 % de teneur en graisse solide à 20 °C.

8. Composition selon l'une quelconque des revendications précédentes, dans laquelle l'huile liquide est choisie parmi le groupe constitué par : l'huile de tournesol à haute teneur oléique, l'huile de tournesol à haute teneur stéarique et à haute teneur oléique, l'huile de carthame à haute teneur oléique, l'huile de soja à haute teneur oléique, l'huile de colza à haute teneur oléique telle que l'huile de canola à haute teneur oléique, l'huile d'algue à haute teneur oléique, l'huile de palme à haute teneur oléique, l'huile d'arachide à haute teneur oléique, l'huile d'olive, l'huile de noix de macadamia, l'huile de graine de moringa oleifera, l'huile de noisette, l'huile d'avocat ou une combinaison de celles-ci.

9. Composition d'enrobage selon l'une quelconque des revendications précédentes, dans laquelle l'huile liquide est l'huile de tournesol à haute teneur oléique ou l'huile de soja à haute teneur oléique comprenant
a) plus de 70 %, de préférence plus de 80 % d'acide gras mono-insaturé
b) moins de 10 %, de préférence moins de 5 % d'acide gras polyinsaturé
c) présente moins de 5 % de teneur en graisse solide à 0 °C,
dans laquelle l'acide gras insaturé contient 18 atomes de C ou plus de 18 atomes de C.

10. Composition selon l'une quelconque des revendications précédentes, dans laquelle la composition comprend 0,1 % à 2 % en poids d'émulsifiants choisis parmi la lécithine de tournesol, la lécithine de soja, le polyricinoléate de polyglycérol (PGPR ; E476), phosphatide d'ammonium (YN ; E442) ou une combinaison de ceux-ci.

11. Composition selon l'une quelconque des revendications précédentes, qui comprend moins de 25 % en poids de cacao.

12. Composition selon l'une quelconque des revendications précédentes qui comprend 1 à 20 % en poids de matière sèche lactique non grasse.

13. Composition selon l'une quelconque des revendications précédentes, comprenant 40 à 60 % en poids de matière grasse comprenant un mélange de
19 à 38 % en poids de matière grasse solide et
16 à 20 % en poids d'huile liquide, et
30 à 40 % en poids de sucre,
0 à 15 % en poids de poudre de cacao, et
0 à 12 % en poids de matière sèche lactique non grasse.

14. Procédé de production d'une composition d'enrobage selon l'une quelconque des revendications précédentes, dans lequel ledit procédé comprend les étapes suivantes :
la fourniture des matières sèches non grasses, de la matière grasse solide et de l'huile liquide,
la fusion de la matière grasse solide,
le mélange de matières sèches non grasses avec l'au moins une partie de la matière grasse solide fondue et
l'obtention d'un mélange de matières grasses et de matières sèches non grasses,
le raffinage du mélange de matières grasses solides et de matières sèches non grasses par mouture pour réduire la particule, de préférence jusqu'à une taille de particule inférieure à 40 microns,
l'ajout de l'huile liquide au mélange raffiné et
éventuellement l'ajout d'émulsifiant au mélange raffiné et/ou au mélange avec l'huile liquide.

15. Procédé de préparation d'une confiserie congelée au moins partiellement enrobée, le procédé comprenant la fourniture d'une composition d'enrobage selon l'une quelconque des revendications précédentes et l'enrobage d'une composition congelée.

16. Confiserie congelée au moins partiellement enrobée avec une composition selon l'une quelconque des revendications 1 à 12.
